# EUROPEAN PATENT APPLICATION

(11) **EP 1 868 127 A1**
(43) Date of publication of application: **19.12.2007**
(21) Application number: 06447079.2
(22) Date of filing: 15.06.2006
(51) Int. Cl.: G06F 21/00

(54) **Device comprising a public and a private area and a method for securely initializing the device**

(71) Applicant: Thomson Telecom Belgium, 2650 Edegem (BE)
(72) Inventor: Duret, Xavier, 2660 Hoboken (BE)
(74) Representative: Kohrs, Martin

(57) **Abstract**

The present invention concerns a device (1), and a method for initializing said device, comprising a first processing means (2) adapted to run an application firmware, a second processing means (3) adapted to run an operating system firmware, a non-volatile memory (6) for storing the application firmware and the operating system firmware, the memory being accessible by the first processing means, a memory (4), booting means (21) for initializing the first processing means prior to the second processing means, and for loading the operating system firmware from the non-volatile memory (6) to the memory (4), and interfacing means (22) between the first processing means and the second processing means for controlling the access of the second processing means to the first processing means.

## Description

The present invention relates to a device comprising a public and a private area and a method for securely initializing the device.

Some networking products comprise several modules developed by different providers. For example a digital subscriber line gateway device, noted DSL gateway, usually comprises an application specific integrated circuit, a board, system software, and application software. Application software comprises the program that permits to operate an application; it may be for example a program that permits to access services provided by a telecommunication operator. The system software comprises the software that permits to run the device. It is generally an operating system. Some DSL gateways comprise an operating system based on Linux Kernel. The Linux Kernel is licensed under the general public license, noted GPL. GPL defines some rights for the user of a program licensed under GPL, rights which may in certain circumstances be extended to other software in the device. Mixing system software with application software, the system software being GPL software, may lead to such an extension.
Some methods permit to isolate different modules of such a device. In an operating system, a supervisor is a program that controls and regulates the executions of various processes that run on the operating system. Processors have been capable to isolate several users and/or several processes by using a combination between a supervisor mode and a user mode. A hypervisor permits several operating systems to run on a computer at the same time. A hypervisor allows isolating each operating system. Though a hypervisor is mainly used for virtualization, for maximizing the use of the hardware resources, it has also been used to prevent the operating system from accessing some peripherals. A hypervisor scheme may be then used to isolate the system software from the application software in a DSL gateway. This requires a modification of the operating system to allow calls to the hypervisor. This is not a convenient solution; the maintenance of an operating system for each distinct hypervisor may be burdensome.

The present invention concerns a device with an architecture that comprises a private area and a public area, and permits to isolate the private area from the public area.

To this end, the invention relates to a device comprising a first processing means adapted to run an application firmware, a second processing means adapted to run an operating system firmware, a non-volatile memory for storing the application firmware and the operating system firmware, the memory being accessible by the first processing means, a memory, booting means for initializing the first processing means prior to the second processing means, and for loading the operating system firmware from the non-volatile memory to the memory, and interfacing means between the first processing means and the second processing means for controlling the access of the second processing means to the first processing means.

The present invention defines a device comprising a public hardware part and a private hardware part. Public hardware is hardware for which information is available to the public mostly because the software that runs on it is public. Private hardware is defined in opposition to public hardware. Non authorized third parties are prevented from gathering information about it or modifying its functionality. The software running on private hardware is private software; it is protected because it contains confidential information that should not be disclosed to third parties or the general public. The private and the public software, running respectively on the private hardware and the public hardware, are initialized independently so that they don't derive from each other.
The private area comprises the first processing means and the non-volatile memory. The public area comprises the second processing means and the first memory. The public area comprises an operating system whose source code can be used, copied, studied, modified and redistributed. The booting means permit to isolate the application firmware running on the first processing means from the operating system. The interfacing means prevents the second processing means from accessing unauthorized areas of the private area. The simple architecture of the device permits to have an application firmware running on a device that runs with an operation system that is a free software, the application software not becoming a free software.

According to an embodiment of the invention, the interfacing means comprises a mailbox memory for passing control messages and said first memory for passing data messages.

According to an embodiment of the invention, the non-volatile memory comprises a public area and a private area for storing the application firmware and the operating system firmware, and filtering means for allowing the second processing means to access the public area and for preventing the second processing means from accessing the private area.

According to an embodiment of the invention, the filtering means comprises an interface and said first processing means.
The second processing means accesses the non-volatile memory through the interface. It sees the entire public area through the interface. Each access to the non-volatile memory is controlled by the first processing means to prevent the second processing means from accessing a non authorized area of the memory.

According to an embodiment of the invention, the device comprises controlling means for authorizing the second processing means to send data on the private area of the non-volatile memory, and controlling the data.

The second processing means can not access the private area. It can send data to the private area under the control of the first processing means. The second processing means is then prevented from sending a corrupted data or data non-authorized by the first processor to the private area.

According to an embodiment of the invention, the device comprises a network interface, the network interface comprising a management interface and a data interface, and means for permitting the first processor to access the management interface and for preventing the second processor from accessing the management interface.
The management interface is part of the private area. It is not accessible by the second processing means.

According to an embodiment of the invention, the network interface is a digital subscriber line interface.

According to an embodiment of the invention, the device is an Integrated Circuit.

Another object of the invention is a method for initializing the device. The method comprises the steps of booting the first processing means, initializing a firmware running on the first processing means, copying a second firmware file from the non-volatile memory into the memory by the first processing means, the second firmware being an operating system, and booting the second processing means by the first processing means. The method for initialisation of the system splits the system into a private part and a public part.

Another object of the invention is a computer program product comprising program code instructions for executing the steps of the process according to the invention, when that program is executed on a computer. By "computer program product", it is meant a computer program support, which may consist not only in a storing space containing the program, such as a diskette or a cassette, but also in a signal, such as an electrical or optical signal.

The invention will be better understood and illustrated by means of the following embodiment and execution examples, in no way limitative, with reference to the appended figures on which:
- Figure 1 is a block diagram of a device compliant with the embodiment;
- Figure 2 is a representation of the layout of the content of the second memory of the device compliant with the embodiment;
- Figure 3 is a block diagram of the device.

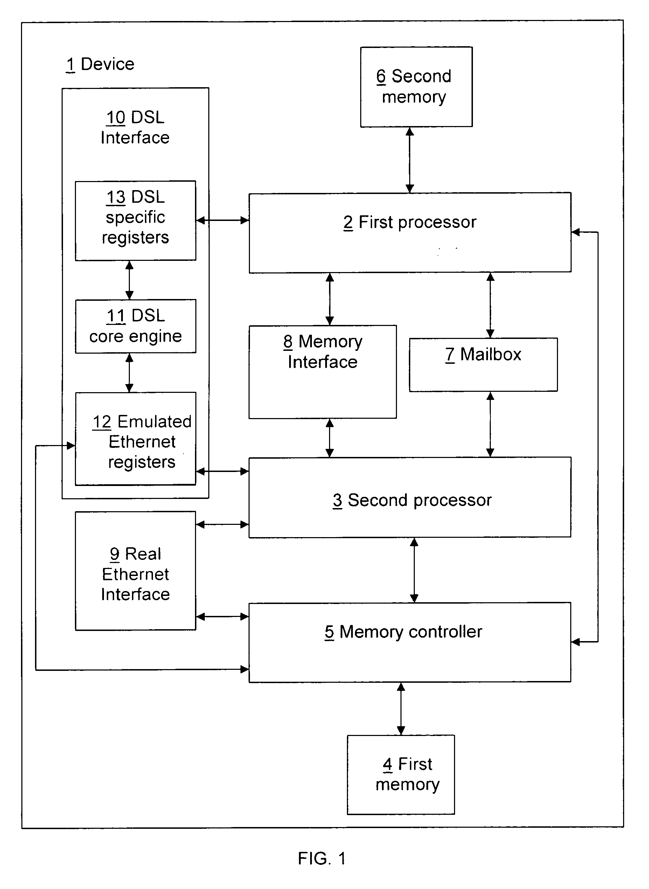

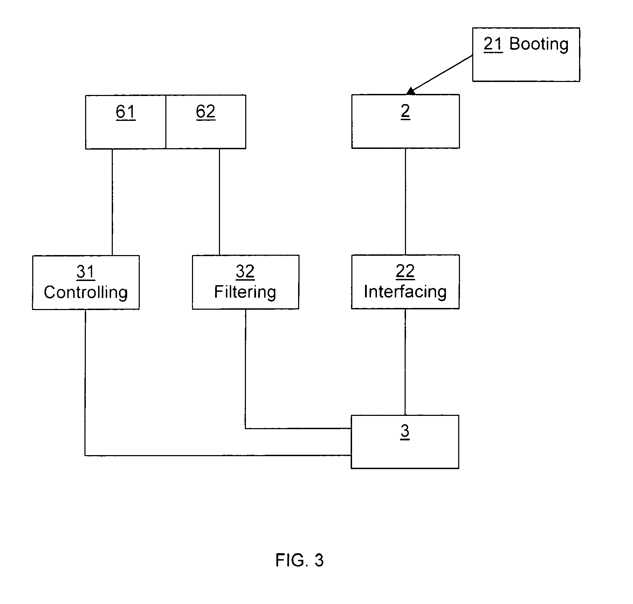

In Figure 1 and Figure 3, the represented blocks are purely functional entities, which do not necessarily correspond to physically separate entities. Namely, they could be developed in the form of software, or be implemented in one or several integrated circuits.

The figure 1 illustrates the device 1 of the embodiment, which is an application specific integrated circuit, noted ASIC. The ASIC is intended to be included in a digital subscriber line gateway. Of course the embodiment is not limited to an ASIC and to a DSL gateway. The device of the invention could comprise several integrated circuits.
The ASIC 1 comprises a first processing means 2. This is the private processor in the architecture. According to the embodiment, the first processing means is a small piece of hardware, such as a finite state machine, that can comprise a read-only memory. It comprises the boot loader program that permits to start the first processor. The private processor is not accessible by a non-authorized third party. The private processor comprises a private firmware, which is for example an application software embedded in the first processor that is only accessible by an authorized third party.
The first processing means may be, in a variant embodiment, a microcontroller or a processor, which is connected to a private memory. Then the private memory is a read-only memory and comprises the private data that is only accessed by the first processor. The private memory comprises the boot loader program that permits to boot the first processor. The boot program is not accessible or modifiable by a non-authorized third party.
The device 1 comprises a second processor 3; this is the public processor that comprises the public software. The second processor is an embedded processor, or microprocessor. It is the principal processor on the integrated circuit: it runs most of the software and the hardware resources of the device. The public processor may be accessed by a non-authorized third party, i.e. to the public. The public software is for example the system software or also an application software that can be provided or modified by a third party, or a non-authorized person. The system software is the operating system of the device. In the embodiment, the operating system on which the second processor runs is the Linux operating system. In a variant embodiment the second processing means could run on another type of operating system that requires to publish the source code of the system software, according to the GPL. The operating system does not access the first processing means. The first processing means does not have any operating system. In a variant embodiment, the first processing means runs on an embedded operating system which is specific to the first processing means. This permits to isolate the first processing means from the second processing means.

The device 1 comprises a memory controller 5 which controls the first memory 4. This first memory is also noted the main memory or the public memory. The first memory is accessed by the first and the second processor. In this embodiment, the first memory is an external double data rate component, noted DDR component. It could as well be an embedded static random access memory SRAM. The DDR achieves greater bandwidth than the ordinary SRAM. The first memory keeps its content as long as power remains applied to the device, and the memory content is removed when the device is shut down. This is a volatile memory. The memory controller may have some filtering capabilities in order to limit the access of a processor to the memory; it permits to dedicate some parts of the memory to a processor that has the right to access it.
The first processor and the second processor communicate through an interface comprising a mailbox 7 and the first memory 4. The second processor accesses the first processor through that interface. The mailbox is a small memory for communication of messages between processors. The mailbox is a component used for passing messages between processor. It is used for transfer of small amounts of data-like commands, for example a few hundred of bytes. The first memory 4 is used to transfer large amounts of data. The interface permits to filter the traffic between the first processor and the second processor. The second processor does not have direct access to the first processor. This is an indirect access that permits to secure the first processor, and not disclosing to the second processor the architecture of the first processor.
The interface is useful for functions that do not have strong real time requirements or functions that don't need to manipulate large amounts of data on the second processor. Such functions can be implemented in user space programs running on the second processor and stored in the first memory. Examples of such functions are firmware upgrades, reconfiguration of a private interface based on user input, and performance monitoring and statistic gathering.

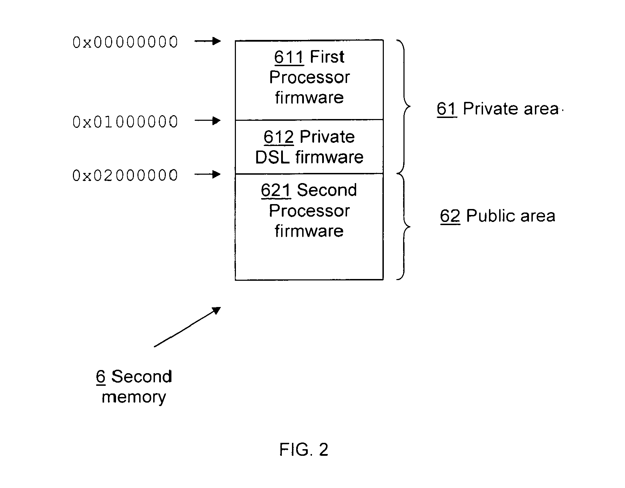

The first processor 2 has also access to a second memory 6, which is an external non volatile memory, a flash memory. The second memory keeps its content even when the device is not powered on. The second memory comprises a private area and a public area as indicated in the figure 2. The first processor is capable of accessing the second memory fully. The second processor has access to the public area of the memory only. The second memory comprises a memory controller not represented. For cost reduction, an ASIC usually comprises the minimum amount of necessary components, and then a minimum amount of memories. In the embodiment the ASIC comprises a single flash memory. In a variant embodiment, the ASIC could comprise at least two flash memories, a flash memory for the public area and a flash memory for the private area. Then the second processor would have a direct access to the public flash memory and would not need to access the public flash memory through the first processor.
The second processor does not access the second memory directly. The device comprises means to filter the access. The interface 8 providing the second processor 3 with an access to the second memory 6 is a standard interface, compliant with the Compact Flash specification, 'CF+ and Compact Flash Specification revision 3.0, 23 December 2004'. The second processor 3 accesses the second memory 6 through the interface 8. Any request sent to the second memory by the second processor is received by the first processor 2. The first processor filters and forwards it to the second memory, and the response from the second memory is received by the first processor that forwards it to the second processor. The first processor checks that the second processor is authorized to access the requested portion of the memory. If the second processor is authorized, the first processor proceeds with the request, and allows the access to the memory. If the second is not authorized, the first processor does not allow the access to the memory. This interface is useful for public firmware upgrade; it offers means for the first processor to ensure that the second processor does not modify the private firmware. The interface allows only modification of the public area of the second memory. The second processor sees a generic interface, and a memory; it does not see that it has access to a limited portion of the memory. Accessing the second memory directly would give the second processor the possibility to access area reserved to the private software on the second memory.

An example of firmware upgrade in the private area of the second memory comprises the steps as follows:
- The second processor stores the new firmware executable file in the first memory. The firmware executable file is a file that comprises a program code can be interpreted by an operating system and a processor. It is also called a firmware build file.
- The second processor notifies the first processor of the new firmware executable file through the mailbox.
- The first processor instructs the memory controller to give it exclusive access to this area of the memory so that public software cannot modify it.
- The first processor checks that the firmware executable file is secure. It verifies that the file has the proper signature. If the file is not secure, the upgrade is not performed.
- If the file is secure, the first processor copies the firmware executable file from the first memory into the second memory.
- The first processor unlocks the corresponding area of memory.
- The first processor notifies the second processor that the operation is finished through the mailbox.
   This scenario assumes that the memory controller of the first memory is able to prevent access to specified areas of the memory to processors other than the first processor. The first memory controller is the only one capable of controlling the locking mechanism. With this procedure, a user, which is by default not trusted, can securely upgrade his modem. The file may be downloaded from the Internet. The upgrade process comprises a verification step, and a corrupted file would then not be accepted.
   The second processor can also store another firmware in the public area of the second memory. This can be a firmware downloaded from the Internet used for example for home networking applications. The second processor then accesses that area through the interface 8 as defined hereafter.

The device comprises two interface modules: a real Ethernet interface module 9, and a DSL interface module 10. The real Ethernet interface 9 is a public interface that may be accessed by the second processor and that may access the first memory. It is intended for a connection to a local network. The DSL interface 10 comprises a DSL core engine 11, DSL specific registers 13 and emulated Ethernet registers 12. The DSL interface is intended to connect the DSL gateway to a digital subscriber line access multiplexer, or DSLAM. Only the first processor has access to the DSL specific registers. It appears to the first processor as an interface with settings specific to DSL. The first processor may exchange private information with the DSL interface such as firmware or information relative to proprietary extensions of the standard. For example, the DSL standard mandates to measure some characteristics of the line; it is possible to provide more than required by the standard by measuring more characteristics which help a telecom operator to diagnose problems on the DSL line. The first processor may then run a firmware for performing these supplementary measurements.
The DSL interface 10 appears to the second processor 3 as an Ethernet interface with the emulated Ethernet registers 12. This is noted the emulated Ethernet interface hereafter. The second processor does not have access to the DSL specific registers 13 of the DSL interface 10. It does not see them. The emulated Ethernet interface permits to download software located on a remote server to the second processor. The emulated Ethernet interface shares simple configuration information with the second processor that does not impact the DSL interface. An example of a configuration command is changing the Ethernet data rate from 100 Mbps to 10 Mbps; this is without effect on the DSL interface.
The DSL interface 10 deals with information specific to the DSL connection, called the private management and configuration, and information independent of the DSL connection, which is the public management and configuration and the data. The first processor 2 processes the private information. The second processor 3 processes the public information as well as the data, which is also public. It does not see and can not access the private information.

In summary, the second processor of the ASIC may access three types of interfaces:
- an interface to the private hardware, comprising the first processor and the second memory. The interface is secured and prevents from deducing the inner working of the private hardware;
- an interface to the public hardware, comprising the real Ethernet interface and the first memory, which is a public interface for the data it processes; and
- an interface for accessing outside the device, through the emulated Ethernet, which does not jeopardize the private software of the device.

There is no hardware debugging function for the first processor. A debugger tool can not access the first processor and then can not access information on the private hardware architecture.

The second memory 6 is shown in the figure 2. It comprises a private area 61 and a public area 62. The private area 61 comprises the first processor firmware 611 and the private DSL interface firmware 612. The public area 62 comprises the second processor firmware 621. The second processor only sees the public area of the second memory. The first processor sees the public and the private areas of the second memory. The first processor prevents the second processor from accessing the private area of the second memory.

The device of the embodiment comprises a public area and a private area. It comprises an abstraction layer that hides the private area to the public area, that prevents the public area from accessing the private area, and does not show any piece of the private area architecture. The abstraction layer checks the access rights coming from the public area.
The public area comprises the second processor 3, the memory controller 5 and the real Ethernet interface 9. The private area comprises the first processor 2, the second memory 6, and the DSL interface 10.
As represented in the figure 3, the abstraction layer comprises:
- interfacing means 22 for interfacing the first processor to the second processor: the interface between the first processor and the second processor comprises the mailbox 7 and the first memory 4,
- filtering means 32 for interfacing the second processor to the second memory: The interface between the second processor 3 and the second memory 6 comprises the emulated compact flash interface 8 and the first processing means,
- controlling means for authorizing the second processing means to send data to the private area of the second memory. Controlling means comprise the mailbox, the first processing means, the first memory and the memory controller.
   In another words, the abstraction layer comprises means for permitting the public area to access the private area in a secure manner. It controls the access to the private area.

With the architecture of the embodiment, a non-authorized party does not have any access to the private hardware and software. A non-authorized party may be either an end user of a device comprising the system, or a third party providing a component integrated with the system. The authorized party is the provider of the private software or hardware of the system. For example, the manufacturer of the ASIC is an authorized party. Another authorized party may be an original equipment manufacturer that has the right to use the ASIC. Another authorized third party could be a telecommunication services operator that provides services to the DSL gateway. The end user of the gateway is not an authorized party; the telecommunication services provider does not want the DSLAM malfunctioning because the user accesses the gateway software.

Of course the system of the embodiment could comprise more memories or more processors. The secure architecture of the embodiment would remain the same with a split between a public and a private hardware and software, where the public area sees a generic interface that permits to hide the private area.

The device comprises booting means 21 to be initialized in a way that ensures the right split between the public and private areas. At start-up of the device the boot loader file comprised in the first processor starts the first processor. A first part of the private firmware executable file is comprised in the first processor. The first processor initializes the controller of the second memory. It fetches the rest of the private firmware executable file from the second memory to the first processor. ln a variant embodiment, the private firmware executable file is totally comprised in the first processor. The private firmware executable file may be encrypted and the first processor contains both the algorithm and the key to decrypt the file. All the secure data is not necessarily stored in the first processor, but it gives some flexibility to store some encrypted data on the second memory. The first processor comprises the keys used to decrypt the encrypted data.
The first processor then successively:
- initializes the memory controller of the first memory,
- initializes the interfaces and the modules of the hardware to the default configuration. This comprises among other the initialization of the mailbox between the first processor and the second processor.
- The firmware executable file that is intended to run on the second processor is stored on the second memory. The first processor copies the file from the second memory into the first memory, and
- starts the second processor.
   In another words the second processor starts from the first memory without having to initialize the second memory controller, which has been initialized by the first processor. The device initialization method permits the firmware running on the first processor not to be considered as derivative work from the operating system running on the second processor.
   At this point the device system has booted; it is initialized and operational. With the hardware architecture and the boot method, the private firmware running on the first processor does not derive from public firmware running on the second processor. The private firmware is not a derivative work of the public firmware.
   The initialization process then comprises the steps of initializing the Compact Flash interface that allows the second processor to access the public area of the second memory.
   Finally the first processor initializes the outer interface, which comprises the DSL interface registers accessed by the first processor, and the emulated Ethernet registers accessed by the second processor.

## Claims

1. Device (1) comprising:
- a first processing means (2) adapted to run an application firmware,
- a second processing means (3) adapted to run an operating system firmware,
- a non-volatile memory (6) for storing said application firmware and said operating system firmware, said memory being accessible by said first processing means,
- a first memory (4),
- booting means (21) for initializing the first processing means prior to said second processing means, and for loading the operating system firmware from said non-volatile memory to said memory (4), and
- interfacing means (22) between said first processing means and said second processing means for controlling the access of the second processing means to the first processing means.

2. Device according to the preceding claims, **characterized in that** said interfacing means (22) comprises a mailbox memory (7) for passing control messages and a memory (4) for passing data messages.

3. Device according to the preceding claims, **characterized in that** said non-volatile memory (6) comprises a public area (62) and a private area (61) for storing said application firmware and said operating system firmware, and filtering means (32) for allowing the second processing means to access said public area and for preventing the second processing means from accessing said private area.

4. Device according to the preceding claims, **characterized in that** said filtering means (32) comprises an interface (8) and said first processing means (2).

5. Device according to the preceding claims, **characterized in that** it comprises controlling means (31) for permitting the second processing means to send data on the private area of said non-volatile memory, and controlling said data.

6. Device according to the preceding claims, **characterized in that** it comprises a network interface (10), said network interface comprising a management interface (11, 13) and a data interface (12), and means for permitting said first processor to access said management interface and for preventing said second processor from accessing said management interface.

7. Device according to the preceding claims, **characterized in that** said network interface is a digital subscriber line interface.

8. Device according to the preceding claims, **characterized in that** said device is an Integrated Circuit.

9. Method for initializing a device (1) comprising a first processing means (2), a second processing means (3), a memory (4), and a non-volatile memory (6), **characterized by** the following steps of:
- booting the first processing means,
- initializing a firmware running on said first processing means,
- copying a second firmware file from the non-volatile memory (6) into the memory (4) by said first processing means, said second firmware being an operating system, and
- booting said second processing means by said first processing means.
